# EUROPEAN PATENT APPLICATION

(11) **EP 3 197 104 A1**
(43) Date of publication of application: **26.07.2017**
(21) Application number: 16152492.1
(22) Date of filing: 22.01.2016
(51) Int. Cl.: H04L 12/58

(54) **MESSAGING SYSTEM**

(71) Applicant: Twig Technology Ltd, London E1 7LS (GB)
(72) Inventor: BURGUN, Jean-Philip, London E1 7LS (GB); PARRY-WILLIAMS, Guy, London E1 7LS (GB)
(74) Representative: Lawrence, Richard Anthony

(57) **Abstract**

A method of receiving a message from a message sending user at a suitably programmed mobile computing device of a message receiving user, the mobile computing device performing the steps of providing location information for the mobile computing device to a messaging server, receiving location-specific content from the messaging server together with the message from the message sending user and presenting the location-specific content and the message to the message receiving user through a user interface of the mobile computing device. A messaging system, a mobile communications device, a messaging server and multiple retailer client networks are also described.

## Description

### TECHNICAL FIELD

This invention relates to a messaging system for a mobile communications device. In particular, not exclusively, the invention relates to a messaging system that is adapted to deliver additional content for users of the messaging system.

### BACKGROUND

The market for mobile devices has boomed in recent years as users strive to stay connected to each other. This explosion has opened up new methods of communication such as social media or instant messaging platforms. Users of such platforms create and share large amounts of digital information. User expectations are that messaging services will be provided without cost, so such services are typically funded by advertising revenues. This requires providing additional content - typically advertising messaging - to the user. It would be desirable to do this in a manner that is technically adapted into the messaging system so as to form an integral part of the messaging process, and to provide additional content of particular value to the user.

### SUMMARY OF THE INVENTION

Aspects and embodiments of the invention provide a messaging system, a mobile communications device, a messaging server and multiple retailer client networks as claimed in the appended claims.

According to a first aspect of the present invention, there is provided a method of receiving a message from a message sending user at a suitably programmed mobile computing device of a message receiving user, the mobile computing device performing the steps of providing location information for the mobile computing device to a messaging server, receiving location-specific content from the messaging server together with the message from the message sending user and presenting the location-specific content and the message to the message receiving user through a user interface of the mobile computing device.

In one embodiment, the location information for the mobile computing device is provided independently of receiving a message. The location information for the mobile device may be provided when there is determined to be a significant location change for the mobile computing device.

In another embodiment the location-specific content presented to the message receiving user has been determined as relevant to a user profile registered by the message receiving user. When presenting the location specific content and the message to the message receiving user, message content may be obscured by the location specific content until a user action. The user action may comprise swiping or closing a dialog window.

In a second aspect of the invention there is provided a messaging client adapted for installation on a mobile computing device, adapted when installed on the mobile computing device to receive a message from a message sending user according to the method set out above. The messaging client may be further adapted to send messages to another user.

An embodiment includes adapting the messaging client to enable the user to block location specific content. The blocking of location content may be enabled for a determined location or for a determined time period.

According to a third aspect of the invention there is provided a method of processing messages at a messaging server to send messages together with location-specific content between users of a messaging system, the method comprising of receiving a message from a sender for routing to the recipient, determining a physical location of the recipient, obtaining a content item from a library of location-specific content, accessing rules for use of the location-specific content to determine that the rules permit the content item to be sent to the recipient and causing the content item and the message to be sent to the recipient.

In an embodiment, the step of determining a physical location of the recipient comprises obtaining location updates from the recipient independent of sending a message to the recipient. The step of obtaining location updates may comprise receiving a location update when there is determined to be a significant location change for the recipient. Determining the physical location of the recipient may comprise determining a predicted location for the recipient. Obtaining a content item may be determined to be location-specific if the recipient is within a geofence or within range of a short range wireless network associated with the content item. Such a short range wireless network may be a wireless beacon.

In a fourth aspect of the invention there is provided a messaging server programmed to perform the method of processing messages at a messaging server. In an embodiment the messaging server comprises the library of location-specific content. The messaging server may be further adapted not to cause location-specific content to be sent if a blocking condition exists. This blocking condition may comprise recipient presence at a predetermined location, or sending of the message within a predetermined time window. In certain embodiments the messaging server may be adapted not to send the same content item to the recipient repeatedly.

In a fifth aspect of the invention there is provided a registration process for a user of a messaging system, wherein the user provides a registration profile for matching against content items in a content library, wherein the registration process establishes rules for determining whether or not the content items may be sent to the user of the messaging system during a messaging process, and wherein the rules are implemented by a messaging server for causing content items to be sent with messages to the user of the messaging system.

This registration profile may comprise a list of identified interests of the user.

In a sixth aspect of the invention there is provided a method of providing location-specific content to a library of location-specific content for use in location-specific services, the method comprising providing a content item and providing rules for use of the content item, the rules comprising a location range for recipients of the content item and profile matching criteria for matching against user profiles of recipients wherein the location-specific content is adapted for provision to users of a service with a matching user profile when the users are in the location range. An embodiment of this invention wherein the service is a messaging service and the recipients for the location-specific content are the message recipients using the messaging service.

Within the scope of the application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 is an overview of the messaging system and contains a computing network, four mobile communication devices, a messaging server and two retailer client networks;
Figure 2 is schematic of the components within a remote messaging server adapted to send messages together with location-specific content between users of a messaging system;
Figure 3 is a schematic of components within a mobile communication device configured to use a messaging system;
Figure 4 is a block diagram showing an overview of the processes in a messaging system;
Figure 5 is a block diagram showing the steps involved when sending a message between a message sending user, a remote messaging server and a message receiving user;
Figure 6 is a block diagram showing the registration process for a user of the messaging system;
Figure 7 is a block diagram showing a registration process for a retailer using the messaging system;
Figure 8 is a logic diagram showing the logic within the messaging system; and
Figures 9A to 9D illustrate the graphical user interface of a mobile device at different stages of use of the messaging system shown in Figure 1.

### DETAILED DESCRIPTION

A specific embodiment of the invention will now be described in which numerous specific features will be discussed in detail in order to provide a thorough understanding of the inventive concept as defined in the claims. However, it will be apparent to the skilled person that the invention may be put in to effect without the specific details and that in some instances, well-known methods, techniques and structures have not been described in detail in order not to obscure the invention unnecessarily.

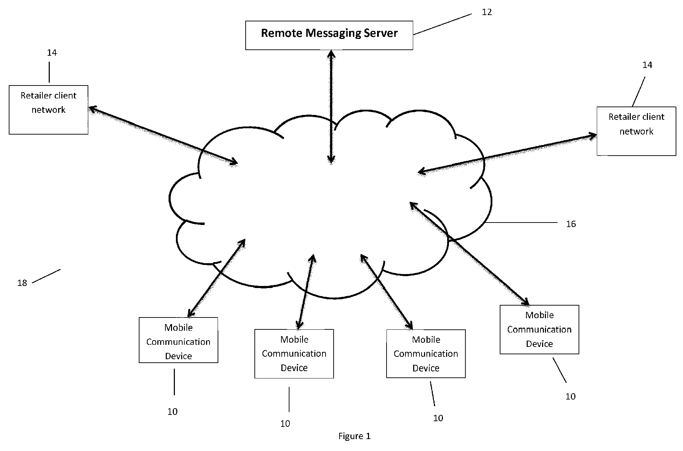

Figure 1 shows a messaging server 12, two retailer client networks 14, and four mobile communication devices 10, such as cellular telephone handsets or tablet computers. The devices are connected to each other by an appropriate data network 16 or combination of networks - this may be the public internet, or any appropriate private network. The means of access to the data network 16 may be any one appropriate to the connecting computing device. For the mobile communication devices 10, this may be by means of data communication over the cellular telephone network using any appropriate standard (such as GSM, UMTS or LTE) or may be by local wireless connection to the internet backbone (using a local wireless communication standard such as Wi-Fi). For the retailer client networks 14, this may be by means of data communication over the public internet or a suitable wireless connection to the internet backbone.

A variety of messaging protocols may be used in embodiments of the invention. The messaging protocol used needs to be appropriate to data communication between mobile communications devices 10 and a central messaging server 12, and can thus use any appropriate server-client messaging system. The format for message content may be any one suitable for transmission in this way - one suitable choice is JSON (JavaScript Object Notation), with XML being another possibility. JSON implementation is described in RFC 7159.

In embodiments of the invention, communication between mobile communications devices 10 and the messaging server 12 or between the messaging server 12 and the retailer client 14 may be encrypted. Any suitable encryption protocol may be used, though this will need to be implementable by each party that needs to use it, meaning that the capability of the mobile communications devices 10 is likely to provide the practical limitation. Mobile communications devices 10 are typically enabled to perform security applications and may comprise a tamper resistant or logically protected area (in some instances, in the Subscriber Information Module - SIM) adapted to hold cryptographic keys or to carry out cryptographic processes. Cryptographic techniques conforming to recognised standards such as AES (standardized in the US as FIPS 197) may be implemented across the range of platforms used in embodiments of the invention.

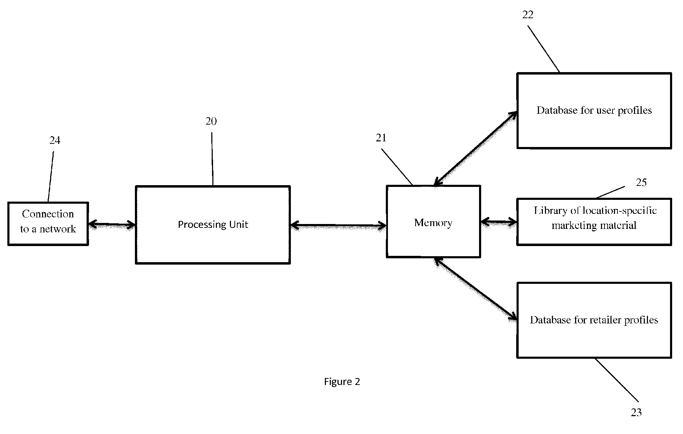

Figure 2 shows a schematic of the remote messaging server 12. The remote messaging server 12 has a processing unit 20, a memory unit 21, a database for user profiles 22, a database for retailer profiles 23, a library of location-specific marketing material 25 and a connection to the network 24. The processing unit 20 stores the algorithm used to control the flow of information through the remote messaging server 12. The database used for storing the users' profiles 22 contains information for all of the profiles, including geographical location information for each user of the messaging system. The database for storing the retailers' profiles 23 contains all of the location-specific content uploaded by retailers as well as geographical information regarding the location of stores. The connection to a network 24 connects the remote messaging server 12 to, for example, the internet or GSM. This means that information stored on the remote messaging server 12 can be accessed remotely from anywhere in the world. The processing unit 20 contains a software security unit which could be a firewall or a method of encryption, in order to protect the information stored on the remote messaging server 12.

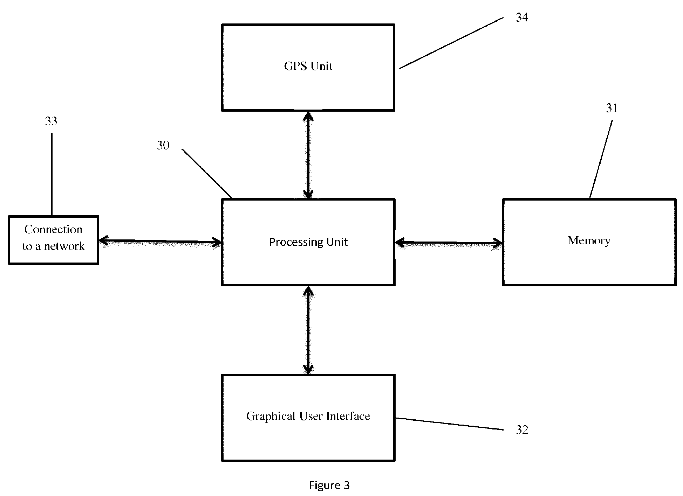

Figure 3 outlines a schematic of a mobile communication device 10 showing a selection of the key components. It does not display all of the components associated with a mobile communication device but it does display components that could be used to implement this invention. The mobile communication device 10 contains a processing unit 30, a graphical user interface 32, a GPS unit 34, memory 31 and a wireless connection to a network 33. The mobile communication device's processing unit 30 controls all of the components within the mobile communication device 10. The graphical user interface 32 displays information graphically to the user and also enables the user to input information to the mobile communication device 10. The GPS unit 34 is used to calculate the geographical location of the mobile communication device 10 - geographical location may be determined by other means, such as location within a cellular communications network cell or by proximity to a local wireless network of known location. The mobile communication device 10 has memory 31 that is used to store information. The wireless connection to a network 33 allows the mobile communication device 10 to send and receive digital information with other mobile communication devices 10.

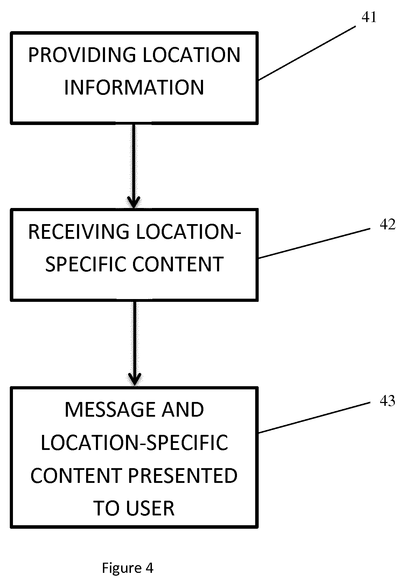

In order to place the embodiments of the invention in a suitable context, reference will firstly be made to Figure 4. Figure 4 shows the steps in a method of receiving a message from a message sending user of a suitably programmed mobile computing device.

In the first step 41 of the process, a message sending user composes and sends a message to a message receiving user. When the message sending user sends the message it is sent initially to a remote messaging server 12. The mobile communications device 10 of the message sending user also sends the location of the mobile communications device 10 to the remote messaging server 12.

In the second step 42 of the process the remote messaging server 12 stores the location of the message sending user before determining the location of the intended recipient of the message, the message receiving user. When the remote messaging server has determined the location of the message receiving user the message is then delivered. However, when the message is delivered to the message receiving user the remote messaging server 12 also sends location specific content to the users of the messaging system 18. The messaging system 18 can send the location-specific content to either one or both of the users of the messaging system 18.

In the third step 43, the mobile communications device of the message receiving user presents the message to the user along with the location-specific content through the graphical user interface 32.

The remote messaging server 12 has been adapted to send messages together with location-specific content between users of a messaging system 18. The remote messaging server 12 comprises of a means to receive messages from and to send messages to users of the messaging system 18, means to track the location of users of the messaging system 18, a means to obtain content items from a library of location-specific content and adapted to access rules for use of the location-specific content and a means for providing a message to a message receiving user, the means being adapted to determine the location of the message sending user and on receipt of the message from the message sending user, to determine at least one content item for sending to the message receiving user together according to the rules of the location-specific content and for sending the message and the determined at least one content item to the message receiving user.

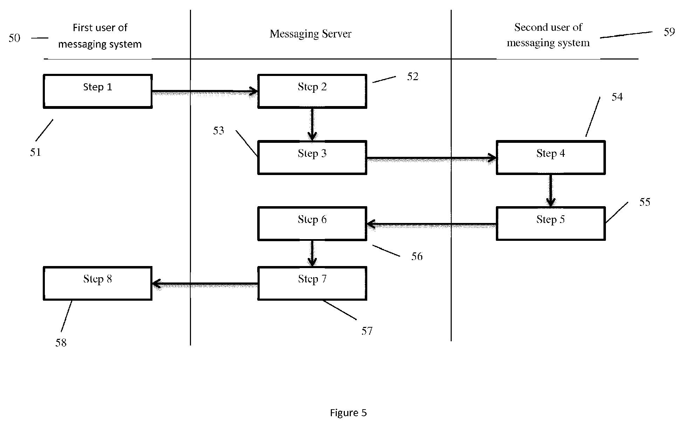

Figure 5 describes an exemplary messaging process according to an embodiment of the invention. A series of steps are described in a process involving the sending of a message from a first user 50 (using a first mobile telecommunications device) to a second user 59 (also using a mobile telecommunications device) and the sending of a message in return, with each message transmission being mediated by a messaging server 12, with the messaging server 12 providing additional content for serving to the message recipient. As is noted below, additional or alternative steps may be provided in other embodiments of the invention.

In the first step 51, the first user 50 composes a message and transmits a first message intended for the second user to the messaging server 12. The message will include address information (which may be any suitable identification for the second user allowing transmission to the second user's messaging client - for example, an e-mail address or a cellular telephone number). The message sent to the messaging server 12 may also include further information, such as first user 50 location and a current disposition for the first user 50 for accepting additional content. This further information could alternatively be provided independently of a message sending event (location updates to the messaging server 12 are described below - for user settings, these could be updated by the sending of a dedicated message when settings are changed), or a strategy involving both approaches could be used. In embodiments, it may also be an option to serve additional content to the first user 50 at this point, perhaps as an additional content message prior to a confirmation that the message has been sent. Presentation of additional content messages is discussed further below.

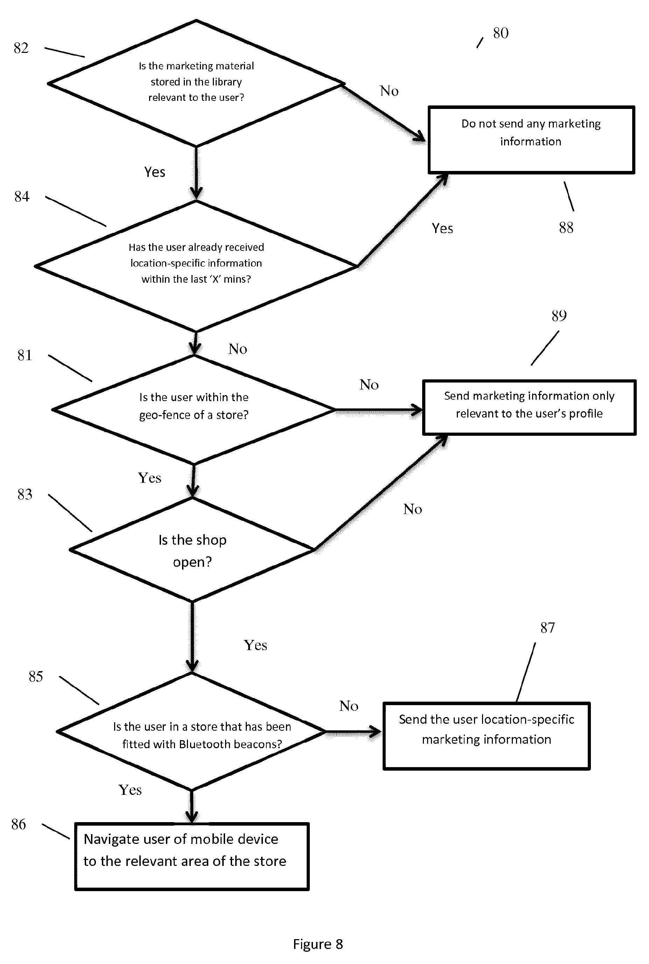

In the second step 52, the message destination (ie the second user 59) is identified by the messaging server 12, and the messaging server 12 determines additional content appropriate for the second user 59. The determination of additional content is described in further detail below, but will be consistent with second user parameters including at least the second user location. The second user location may already be being tracked (as discussed below) or may be determined by the messaging server 12 by sending a message to the second user device to obtain information from the device, for example by a request to the second user's messaging client to use a location services feature associated with the device's operating system (such as the iOS Core Location framework or the Android Location Manager) to determine current location from the range of location services available to the device (for example GPS, cellular communications cell, or mapped locations of Wi-Fi networks and Bluetooth beacons) and to send this back to the messaging server 12 in a dedicated message. The second user location and additional second user details may be used to identify potential additional content for provision to the second user 59, and if there is more than one source of qualifying additional content, may be used to prioritise it. An exemplary strategy for provision of additional content is discussed further below with reference to Figure 8.

In the third step 53, the additional content and the first message are sent to the second user 59. In the embodiment shown, both the additional content and the first message are sent by the messaging server 12 to the second user 59. Other strategies are possible if the messaging server simply identifies, rather than actually obtains, the additional content - this reduces the size of messages sent in traffic, but requires an additional step to be carried out for the additional content to reach the user device. One approach is for the messaging server 12 to instruct an additional content source to send the identified additional content to the second user 59 - if this is done, the second user messaging client will then need to reconcile the additional content with the message before presentation to the user. A second approach is for the messaging server 12 to send a link to the full additional content - rather than informative additional content itself - to the second user 59. In this case the messaging client can then use the link to obtain the additional content in the display step.

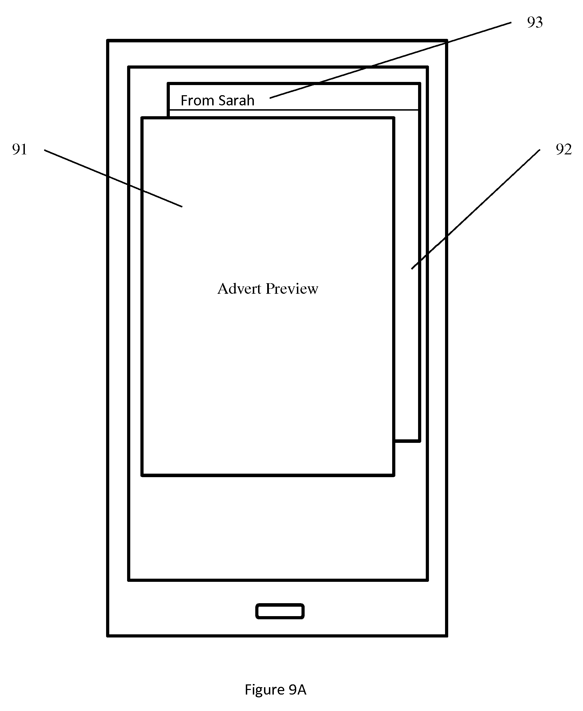

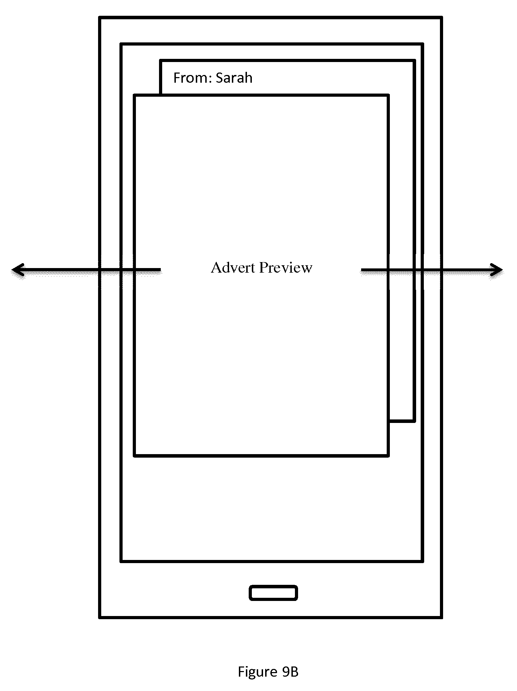

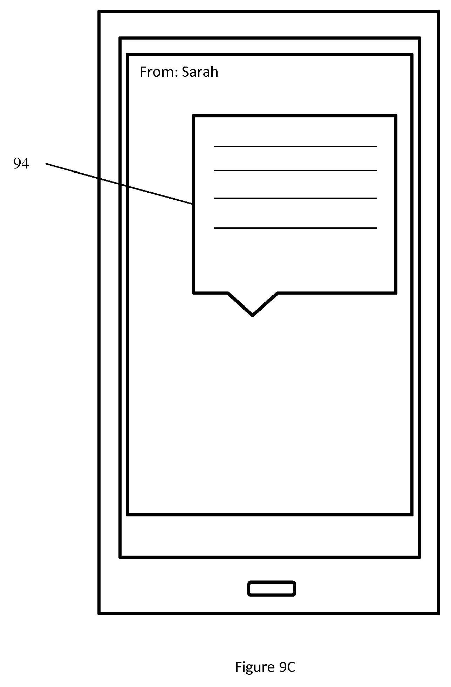

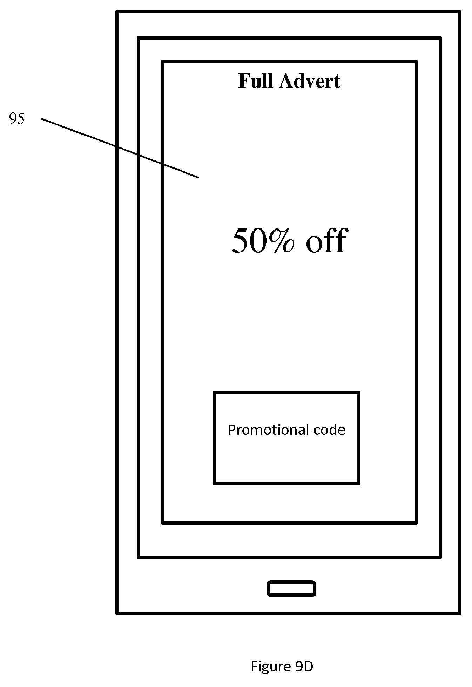

In the fourth step 54, the additional content and the first message are displayed to the second user 59. Approaches to providing the additional content to the user are discussed below with reference to Figure 9 - typically these will provide the additional content to the user before or along with the display of the message, and where practical the additional content will be relevant to the second user location at the time of message delivery.

In the fifth step 55, the second user 59 prepares and sends a second message in reply to the first message. The same approach may be used as in the equivalent (first) step described above.

In the sixth step 56, the messaging server 12 determines additional content appropriate for the first user 50. This step of determining additional content may already have been carried out when the first message was received at the messaging server 12, as all information relevant to a message sent to the first user 50 at that time would be available to the messaging server 12. However, if the response was delayed, the first user location information may have changed, in which case it may be desirable to determine or re-determine additional content for sending to the first user 50 at that time.

In the seventh step 57, the additional content and the first message are sent to the first user 50. Again, the same approach may be used as used in the equivalent (third) step described above.

In the eighth step 58, the additional content and the second message are displayed to the first user 50. Again, the same approach may be used as used in the equivalent (fourth) step described above.

The appropriate steps can then be repeated for as long as the conversation continues. As discussed below, additional content may not be provided with every message - for example, the additional content algorithm may determine that no additional content should be provided when the user is at home, has received a number of additional content notifications within quick succession or the additional content does not match the user's interests.

Figure 5 shows the location-specific information sent to the remote messaging server 12 when a user of the messaging service sends a message. As noted above, when a message is sent to the remote messaging server 12 from a mobile communication device 10, the location of the mobile communication device 10 is also sent to the remote messaging server 12. As discussed above, the operating system of the mobile device 10 will typically provide a location determining service that can be called by the user messaging client to enable current location to be determined from any location source available to the mobile device 10 and sent in a standard format to the messaging server 12. By sending the location of the mobile device 10 to the remote messaging server 12 the algorithm can map the geographical location of each mobile device 10 with respect to time. This information can be stored on the server 12 and used to profile a user of the messaging system 18. By storing the geographical location of a user with respect to time the algorithm can predict where a user lives and works. This helps the algorithm develop an accurate profile of a user which can then be used to target them with relevant marketing material. This approach may be used to support provision of additional content based on a predicted location.

The location of the mobile device 10 can also be sent to the remote messaging server 12 independently of a message being sent. This is important if a user of the messaging system 18 is not using the messaging system 18 very frequently. The frequency of location updates the remote messaging server 12 receives from each user can be controlled by, for example but not restricted to, the time since last location update or distance a mobile communication device 10 has travelled since last location update. Updating may be determined by services available under the operating system of the mobile device 10- for example, with an iOS device the significant-change location service may be used to provide a location update only when there has been a significant change in location. This helps to create an accurate profile of a user's location with respect to time as the user may have moved since sending the previous message. The location updates of each user are fully automated by the software and do not require the user to manually send the information to the remote messaging server 12. It is not desirable to continuously track the location of a user as this would be wasteful of the battery of the mobile communication device 10. However, by controlling the frequency of location updates the accuracy of location of each user and the battery life within each mobile communications device 10 can be optimised.

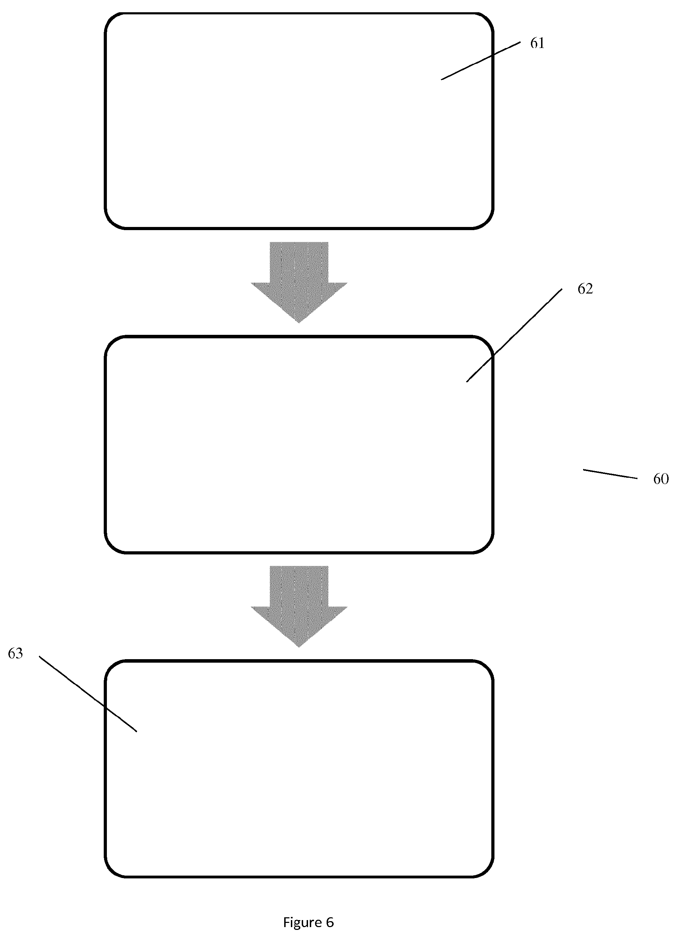

In order to help create an accurate profile of the users of the messaging system 18, every user must register and create a personal profile before using the messaging system 18, as shown in Figure 6. The first step 61 in the user registration process 60 is a user of the messaging system 18 installing the messaging system 18 onto their mobile communication device 10. The second step 62 involves the creation of the user's profile. The user inputs, for example, their name, date of birth, sex, home address, email address, social media details, personal interests and shopping preferences. The user will select relevant interests and shopping preferences from a list of options during this step in order to gather information regarding their shopping preferences. The third and final step 63 in the registration process involves the user being allocated an online account. The account is stored on the messaging server 12 and the user can access their account to log on and update their personal information at any point. This helps to keep the database 22 as up to date and relevant as possible.

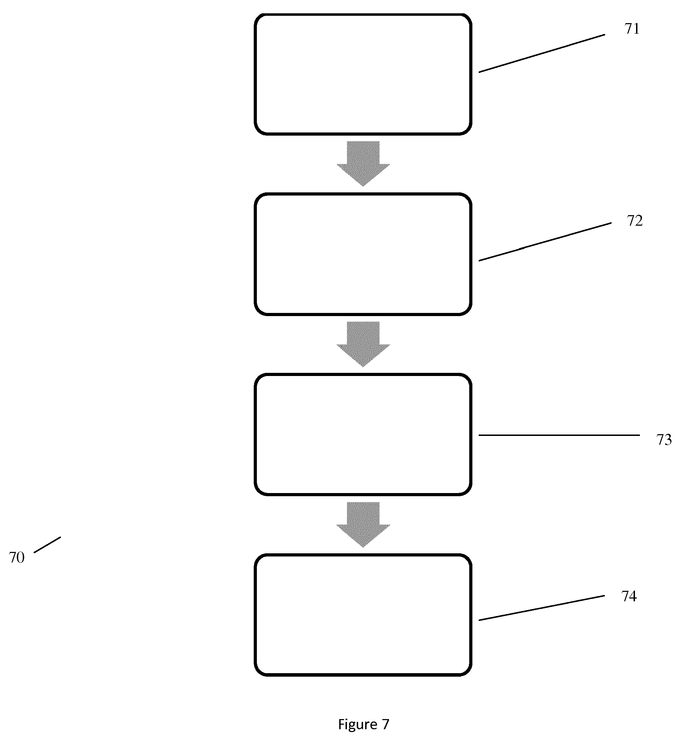

The messaging system 18, as shown in Figure 1, contains a library of location-specific marketing material 25. The library 25 is created through the registration of retailers and businesses to the messaging system 18 as shown in Figure 7. The first step 71 in the retailer registration process involves the retailer signing up to the messaging system 18. In the second step 72 the retailer inputs information indicative of the store. This can include, for example, the name of the company, what they sell, the location of stores, what promotions and offers they have and appropriate marketing material such as adverts. In the third step 73, this information is then processed and a map of the stores and associated offers is created and stored in the library of location-specific marketing material 25. The final step 74 in the registration process involves each retailer being assigned a unique online account. The retailer can log onto their online profile in order to manage their portfolio in order to accurately reflect the in store offers and promotions.

The registered information stored on the database 23 regarding the location of retailers' stores allows the algorithm to create a map of retailers and the relevant marketing material associated with each location. This is then stored in the library of location-specific content 25 on the remote messaging server 12. When the retailer registers the location of a store on the library 25 a perimeter is set up around the location. This perimeter is known as a geo-fence. The geofence is a zone that is set up around a business; this could be for example a 500m radius. Any user of the messaging system 18 found to be within the geo-fence is deemed to be within a suitable walking distance of the store and thus could be interested in the location-specific content the store has on the library 25. The retailer can access their account 74 through an online interface in order to adjust parameters of their account. This could, for example, be to change the radius of the geo-fence or even the shape of the geo-fence. The retailer can also update their portfolio of location-specific content through an online interface. This allows retailers to prioritise the distribution of location-specific content on a day to day basis in order to send users of the messaging system 18 the most up to date and relevant location-specific content possible.

The role of the remote messaging server 12 will now be discussed in more detail. When a user of the messaging system 18 sends a message it is, as previously discussed, firstly sent to the remote messaging server 12 along with the location of the mobile communication device 10 belonging to the message sending user. The algorithm, which is part of the processing unit 20, processes this information along with the information stored within the user's profile on the database 22 to determine if it is appropriate to send the user location-specific content from the library 25. For example, a user may have indicated interest in gourmet coffee and craft beer, but not in fashion - such a user may then receive content from gourmet coffee retailers and bars and retailers specialising in craft beer, but not from fashion retailers. Figure 8 shows the logic 80 in the processing unit 20 when assessing whether to send a user location-specific content. The algorithm makes the decision on whether or not to send the mobile communication device 10 location-specific content based, not exclusively, on the time of day 83, location of the user 81 and the user's unique profile 82 when compared to the library of location-specific content 25. The user of the messaging system 18 can be sent information independent of location 89 when there is no location-specific content suitable to send - for example, if the user is outside the perimeter of any geo-fences for any location-specific content appropriate to send to that user, or if all such location-specific content has already been sent to that user. The user of the messaging system 18 may in embodiments also be sent location-specific content when the logic 80 shown in Figure 8 is satisfied even if the message sending user has not sent a message or if a message receiving user has not received a message.

The processing unit 20 can access information regarding a user stored on the database 22 which includes information indicative of a user's geographical location and information about the time of day to profile the individual and intelligently target them with location-specific content. Using this data stored on the remote messaging server 12 the processing unit 20 can detect the user leaving their home, the location of which is stored on the database 22. This would then trigger the processing unit 20 to process the data indicative of their location and profile to send them appropriate location-specific content. This can be used in conjunction with the logic 80 shown in Figure 8 to send users of the messaging system 18, location-specific content that is tailored to each individual user and is relevant with respect to location and time.

In embodiments, the processing unit 20 can trace a geographical path of a user in order to determine where they have been with respect to time. This may have particular benefits where a mapping has been made of store locations (particularly indicating the physical extent of specific stores). This allows the messaging system 18 to capture information regarding what stores a user of the messaging system 18 has previously visited - a "visit" may be determined by remaining within defined store boundaries for a period of time. This information helps to intelligently target a user of the messaging system with location-specific content by predicting the location of the user before they are at a given location. For example if a user of the messaging system visited a large number of high end fashion retailers in the build up to Christmas one year then the information could be stored on the remote messaging server 12 in order to intelligently target them with relevant information the following year. The ability to map what stores users of the messaging system 18 have visited allows the processing unit 20 determine the number of visits any given store has per month. This information could be stored in the database of retailer profiles 23 and be used, for example, to intelligently predict what retailer a user of the messaging system 18 is going to visit next. A user's "store visiting track" could be stored as a data item for a user for a particular journey. A user's retail history of use of physical stores can thus be extended beyond stores where the user has made a purchase (or a trackable purchase - a cash purchase may not be trackable) to stores where the user has satisfied the criteria set to define a store visit.

The location criterion could be more stringent in certain embodiments of the invention. For example, the user may not wish to receive marketing information whilst they are at home. This is particularly but not exclusively relevant, to users of the messaging system 18 that live within the geo-fence of a nearby retailer. In this particular embodiment the algorithm would not send any marketing information to the user when the location of the mobile device 10 matches the location of the user's home. This is not exclusive to the user being at home and could include other situations, for example, the user is abroad or at work. The user of the messaging system 18 has the option to receive location-specific content in these example situations if they wish.

A number of potential scenarios of when a user could be sent location-specific content from the library 25 will now be discussed. These scenarios are by way of example and are by no means exhaustive.

The first scenario is when a user crosses a geo-fence and is thus deemed to be within close proximity of a business. The processing unit 20 compares the profile of the user to the location-specific content on offer within the geo-fence in order to deem whether the location-specific content is relevant to the user. If the location-specific content is relevant to the user the messaging system 18 will distribute the relevant location-specific content to the user. This could be in the form of a push notification which would alert the user of the location-specific content. The location-specific content can be in the form of, for example and not limited to: an image, a video, a promotional code, a quick response (QR) code or a bar code. The user can, but does not have to be actively using the messaging system 18 on their mobile device 10 to receive location-specific content. However, they do need to be within a geo-fence in this particular scenario.

A second situation arises when the user of a mobile device 10 sends a message using the messaging system 18. When a message is sent the location of the mobile device is automatically updated on the remote messaging server 12 as shown in Figure 5. The processing unit 20 will firstly compare the user's profile to the library of location-specific content 25 and determine the most relevant location-specific content for the user. As shown by the logic 80 in Figure 8 the messaging system 18 will then check if the user has received an advert within a given time frame. If the user is not within a geo-fence but there is appropriate content in the library 25 then the messaging system 18 will supply the user with additional content deemed to be relevant to their individual profile but not their location 89. If the user is within a geo-fence of a store and that store is open then the messaging system 18 will send the user additional content based both on their location and relevance to their registered profile. Crucially the processing unit 20 may choose not to send any location-specific content in certain circumstances as outlined by the logic 80 in Figure 8. For example if the library content is not appropriate for the user or the user has already received a high number of location-specific content notifications 84 within a given time frame. In this scenario the user does not necessarily have to be within a geo-fence in order to receive additional content but they do have to be actively using the messaging system 18.

A third potential way in which the messaging system 18 could distribute location-specific content is when the user of the messaging system 18 is physically in a store that has registered 70 to distribute location-specific content with the messaging system 18. This is particularly, but not exclusively, relevant to stores where Bluetooth beacons have been installed. The processing unit 20 can use the geographical location of the mobile device 10 to determine when a mobile device 10 is in a store where Bluetooth beacons have been fitted. The Bluetooth beacons can then be used to accurately calculate the location of a mobile device 10 within the store. The processing unit 20 can use the accurately calculated location of the mobile device 10 to send the user information regarding the exact location of the location specific content within a store. This enables the messaging system 18 to direct a user to specific areas of a store relevant to the location-specific content. The area of the store that the retailer wishes to steer the user of the messaging system 18 to can be controlled by the retailer on their online account 74.

In certain situations the user of the messaging system may be within the geo-fences of multiple businesses. In this situation it is desirable to prioritise the location-specific content with relevance to each individual user. The processing unit 20 will send the user the relevant location-specific content in the order of relevance, as ranked by the processing unit 20, when the logic 80 in Figure 8 is satisfied. This prevents the user of the messaging system 18 being sent multiple versions of the same location-specific content when there are other potential pieces of relevant location specific content available to the user.

An exemplary approach to presenting messages with additional content will now be described in more detail with reference to Figures 9A to 9D. These Figures show in stylized form the display provided by the messaging client at a user device that has received a message with additional content from the messaging server.

Figure 9A shows an additional content window 91 displayed over (and hence obscuring) the main part of the received message 92. In this arrangement, it is clear that a message from a particular user has been received (as a contact name bar 93 of the received message is shown) but the message content is obscured. The user needs to address the additional content window 91 before viewing the message content.

Figure 9B show alternatives for acting on the additional content window - in this case, the alternatives offered are to swipe left to dismiss the additional content or to swipe right to preserve it. Other alternative screens are possible at this stage - for example, buttons may be presented (for example "dismiss", "view" and "keep" for viewing later), or no buttons may be shown but pressing the content window for a defined period of time may dismiss it. The additional content window can present information in various forms; it could be presented as, for example but not limited to, text, image or video formats. This may be matched to the message type - for example, using this approach for a text message the additional content will always be provided as text, for a picture message the additional content will be an image, and for a video message the additional content will also be video. In certain embodiments of the invention the additional content window could be displayed in such a way that the message and additional content are displayed simultaneously thus giving the user the option to respond to messages without dismissing the additional content.

Figure 9C shows the result of dismissing the additional content window 91 - the message content 94 is visible, as for any messaging client.

Figure 9D shows the result of the user selecting the additional content window for further review. In this case, a modified additional content window 95 is provided showing details of an offer that may be of interest to the user. This allows the user the option of saving the additional content - in this case, so that it can be shown in a specific store when making an appropriate purchase to obtain a lower offer price - or of dismissing it if it is not of use, or of cacheing it for further consideration later. After one of these steps has been taken, the screen of Figure 9C will be presented with the message content visible.

Other strategies to display content may be used - for example, in the initial state shown in Figure 9A the received message may not be displayed at all, but may only appear when the additional content window 91 has been acted upon as shown in Figure 9B or Figure 9D.

In some contexts, the user may be able to suppress the sending of additional content - for example, the user (or the messaging server) may establish a period when it is inappropriate to contact the user with offers, as it is night time or another time when the user will not be travelling. In some contexts, the user may receive the additional content, but may suppress notification (it will be sent, but not displayed) - in these cases, the additional content may pass directly into a cache for later viewing by the user, though such content would then typically be flushed from the cache at some point after receipt. As noted in Figure 8, the messaging server itself may not provide additional content if the user has already received content - for example, if more than a determined amount of additional content has been received by that user, or if the user has received all content appropriate to a particular location.

Many modifications may be made to the above examples without departing from the scope of the present invention as defined in the accompanying claims.

## Claims

1. A method of receiving a message from a message sending user at a suitably programmed mobile computing device of a message receiving user, the mobile computing device performing the steps of;
providing location information for the mobile computing device to a messaging server
receiving location-specific content from the messaging server together with the message from the message sending user
presenting the location-specific content and the message to the message receiving user through a user interface of the mobile computing device.

2. The method as claimed in claim 1, wherein the location-specific content presented to the message receiving user has been determined as relevant to a user profile registered by the message receiving user.

3. The method as claimed in claim 1 or claim 2, wherein in presenting the location specific content and the message to the message receiving user, message content is obscured by the location specific content until a user action.

4. A messaging client adapted for installation on a mobile computing device, adapted when installed on the mobile computing device to receive a message from a message sending user according to the method of any of claims 1 to 3.

5. A messaging client according to claim 4, wherein the messaging client is adapted to enable the user to block location specific content and wherein blocking of location content may be enabled for a determined location, or for a determined time period.

6. A method of processing messages at a messaging server to send messages together with location-specific content between users of a messaging system, the method comprising;
receiving a message from a sender for routing to the recipient;
determining a physical location of the recipient;
obtaining a content item from a library of location-specific content, accessing rules for use of the location-specific content to determine that the rules permit the content item to be sent to the recipient; and
causing the content item and the message to be sent to the recipient.

7. A method as claimed in claim 6, wherein determining a physical location of the recipient comprises obtaining location updates from the recipient independent of sending a message to the recipient.

8. A method as claimed in claim 6 or claim 7, wherein determining the physical location of the recipient comprises determining a predicted location for the recipient.

9. A method as claimed in claim 6 or claim 7, wherein a content item is determined to be location-specific if the recipient is within a geofence associated with the content item.

10. A method as claimed in claim 6 or claim 7, wherein a content item is determined to be location-specific if the recipient is in range of a short range wireless network associated with the content item.

11. A messaging server programmed to perform the method of any of claims 6 to 10.

12. The messaging server of claim 11, wherein the messaging server is adapted not to cause location-specific content to be sent if a blocking condition exists.

13. The messaging server of claim 12, wherein the blocking condition is recipient presence at a predetermined location or if the message is sent within a predetermined time window.

14. A registration process for a user of a messaging system, wherein the user provides a registration profile for matching against content items in a content library, wherein the registration process establishes rules for determining whether or not the content items may be sent to the user of the messaging system during a messaging process, and wherein the rules are implemented by a messaging server for causing content items to be sent with messages to the user of the messaging system.

15. A method of providing location-specific content to a library of location-specific content for use in location-specific services, the method comprising:
providing a content item and providing rules for use of the content item, the rules comprising a location range for recipients of the content item and profile matching criteria for matching against user profiles of recipients;
wherein the location-specific content is adapted for provision to users of a service with a matching user profile when the users are in the location range.
